# EUROPEAN PATENT APPLICATION

(11) **EP 1 638 022 A2**
(43) Date of publication of application: **22.03.2006**
(21) Application number: 05105889.9
(22) Date of filing: 30.06.2005
(51) Int. Cl.: G06F 17/30, G06F 9/44

(54) **System and method for developing portal applications and automatically deploying them into a portal server application**

(30) Priority: 16.08.2004 EP 04103922
(71) Applicant: International Business Machines Corporation, Armonk, NY 10504 (US)
(72) Inventor: Buehler, Dieter, Dr., 72070 Tuebingen (DE); Hepper Stefan, 72072 Tuebingen (DE); Schaeck, Thomas, 77855 Achern (DE); Stober, Thomas, 71032 Boeblingen (DE)
(74) Representative: Klein, Hans-Jörg

(57) **Abstract**

The present invention provides a system and method for developing a Portal Application by creating a Portal Application Archive, and automatically deploying the Portal Application Archive into a Portal Server Application by using a Portal Application Archive specific deployment mechanism. The Portal Application Archive represents an entity which includes an assembly of all required application components forming a coherent Portal Application, and additionally an application component assembly descriptor which specifies how the single application components need to be assembled to the complete Portal Application on the Portal Server Application. The Portal Application Archive is provided to the Portal Server environment and is automatically deployed into the Portal Server environment by using a Portal Application Archive specific deployment mechanism. The deployment mechanism evaluates the application component assembly descriptor information and applies that information to the deployment process. The present invention allows to develop complete Portal Application consisting of pages, Portlets, communication channels between Portlets etc. that can be deployed either out-of-the box or serve as a template that gets further customized at deployment time

## Description

### Field of the present invention

The present patent application relates to a system and method for developing Portal Applications and automatically deploying them into a Portal Server Application.

### Background of the present invention and prior art

A Portal Server Application provides a flexible framework to produce very complex web sites with very little effort. The basic functional units of the Portal Server Application are Portlets. Portlets can be considered as building bricks to create complex web sites with sophisticated features. The Portal Server Application aggregates the output of the individual Portlets to output which can be rendered in a browser. This aggregation of content is the key feature of Portal Server Applications, since it integrates the UI of independent Portlets nicely without the need to write any integration code.

Each Portlet is a standalone unit of code, which gets compiled, packages and installed independently. This is very advantageous when integrating Portlets/Content from very different Providers into a homogeneous web site. There is virtually no integration effort. The administrator of the Web Server installation will install each desired Portlet individually and arrange the layout of the Portlet when designing the web site.

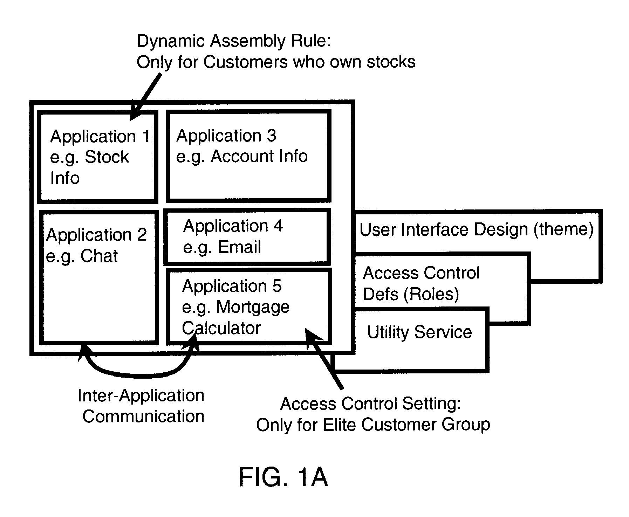

A disadvantage of this concept arises, when a complex Portal Application comprises more than one Portlet. For instance an Online Banking Application would have many multiple Portlets, for example an Account Portlet, a Stock Price Portlet, a Stock Purchase Portlet, Email Portlet, a Loan Portlet, a Mortgage Portlet (see Fig. 1 A) .

Typically these Portlets can be developed and provided by the application developer as part of a consistent Portal Application. Unfortunately the Portal Application developer cannot ship the Portal Application as a single coherent unit to his customers. Instead he needs to ship his Portal Application as individual pieces or so called Portlets. At the customer's site (Portal Server Application), each of the required Portlets of the Portal Application needs to be installed and assembled individually one after each other. The administrator must perform all these installation steps for each Portlet and also finally define how the Portlets should be arranged in the web site layout. The installation of complex Portal Applications becomes a very challenging and difficult task.
This problem becomes more significance as the features of Portal increase: Portal Applications, which are developed for that platform, take advantage of new capabilities and their complexity is growing as well. Modern Portal Applications comprise more than just a couple of Portlets. Further components can be added to produce even more sophisticated J2EE applications. A complex vertical J2EE application comprises manifold base J2EE component types as well as many Portal specific components types, which are all sewed together to a coherent Portal Application produced by a large application development team.

In this patent application all components which make up a Portal Application are covered by the term "application components". Such application components may be for instance individual Portlet Applications (e.g. embedded as WAR-Files, Code + XML), Layout Design (e.g. Themes & Skins), Portlet Filters (Code + XML), Access Control Definitions and Roles (XML), Dynamic Assembly Modules / Conditions as special case (e.g.Code + XML), Page / Navigation Definitions (e.g. XML), URL Mappings (e.g. XML), Documents (e.g. XML Metadata + binary), Enterprise Java Beans, JCA Connectors (e.g. Embedded as JAR-Files), Servlets (e.g. Embedded as WAR Files), Portlet Utility Services, Included Web Services, Inter Application Communication Definitions (e.g. "Click-2-Action"), JSF Components.

### Object of the present invention

It is object of the present invention to provide a new system and method for developing a Portal Application and deploying it into a Portal Server Application environment avoiding the disadvantages of the prior art.

### Brief summary of the present invention

The present invention provides a system and method for developing a Portal Application by creating a Portal Application Archive, and automatically deploying the Portal Application Archive into a Portal Server Application by using a Portal Application Archive specific deployment mechanism. The Portal Application Archive represents an entity which includes an assembly of all required application components forming a coherent Portal Application, and additionally an application component assembly descriptor which specifies how the single application components need to be assembled to the complete Portal Application on the Portal Server Application environment. The Portal Application Archive is provided to the Portal Server environment and is automatically deployed into the Portal Server Application environment by using a Portal Application Archive specific deployment mechanism. The deployment mechanism evaluates the application component assembly descriptor information and applies that information to the deployment process. The present invention allows to develop complete Portal Applications consisting of pages, Portlets, communication channels between Portlets etc. that can be deployed either out-of-the box or serve as a template that gets further customized at deployment time.

### Brief Description of the several views of the drawings

The above, as well as additional objectives, features and advantages of the present invention will be apparent in the following detailed written description.

The novel features of the invention are set forth in the appended claims. The invention itself, however, as well as a preferred mode of use, further objectives, and advantages thereof, will be best understood by reference to the following detailed description of an illustrative embodiment when read in conjunction with the accompanying drawings, wherein:
Fig.1A shows an example of a structure of Portal Application,
Fig.1B shows the prior art development process of a Portal Application,
Fig.1C shows the prior art deployment process of a Portal Application,
Fig.2A shows the basic development process of a Portal Application according to the present invention,
Fig.2B shows the basic deployment process of a Portal Application into a Portal Server according to the present invention,
Fig.3A shows an example of a Portal Application that is developed and deployed by the present invention,
Fig.3B shows a preferred embodiment of the development and deployment process of a Portal Application as shown in Fig. 3 A according to the present invention,
Fig.3C shows the result of the inventive development process according to Fig.3 B,
Fig.3D shows a preferred implementation of deployment process in a Portal Server Application according to the present invention, and
Fig.4 shows an example of the content of an application component assembly descriptor which is part of the inventive Portal Archive.

Fig. 1A shows an example of a complex Portal Application. The Portal Application (e.g. Online Banking Application) consists of multiple Portlets like Account Portlet, Stock Price Portlet, Stock Purchase Portlet, Email Portlet, Loan Portlet, Mortgage Portlet etc.

Typically these Portlets can be developed and provided by the application developer as part of a consistent application. However the application developer cannot ship that application as a single coherent unit to the customer. Instead he needs to ship his application as individual pieces of Portlets. At the customer's side, each of the required Portlets needs to installed and assembled individually one after each other. The administrator must define all these installation steps and also finally define how the Portlets should be arranged on the web site layout. The installation of complex Portal Application becomes very challenging and difficult task.

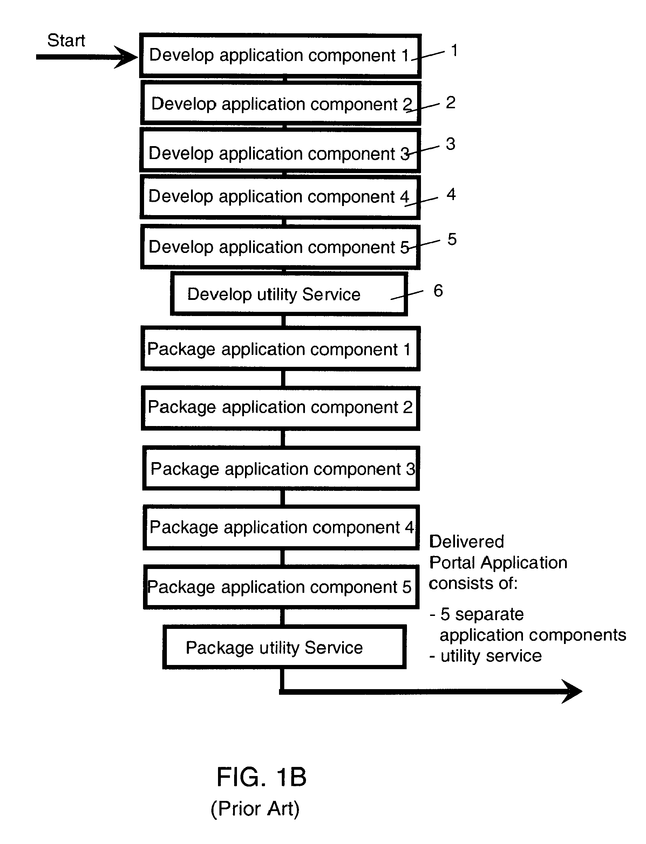

Fig.1B shows the prior art development process of a Portal Application as shown in Fig. 1A.

Each application component 1 - 5 is developed and packaged individually. Typically each of these packages is represented as a separate file, e.g. war file.

The information which defines how the individual application components need to be assembled by the administrator at the customer's site to entire Portal Application is normally provided by a user manual.

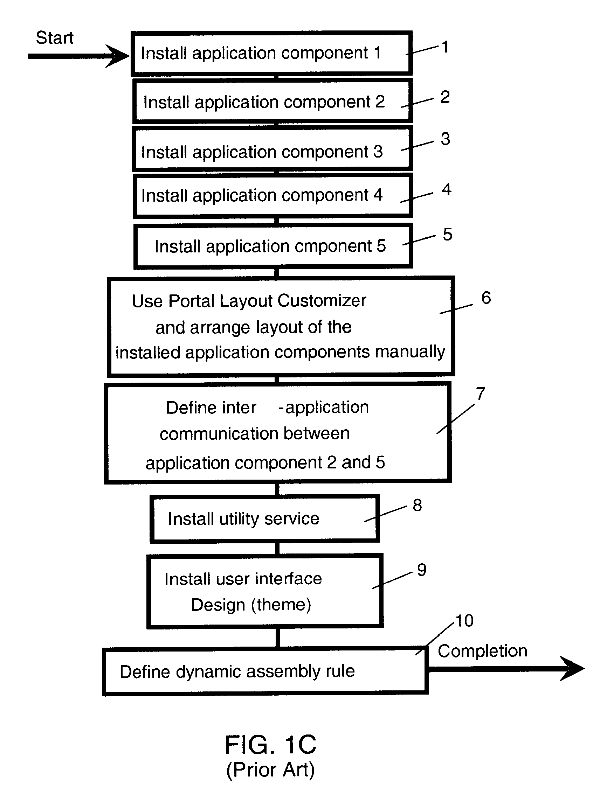

Fig.1C shows the prior art deployment process of a Portal Application into a Portal Server Application environment.

In today's Portal Server Application environment, the administrator would have to install each application component 1-5 individually. After installation he has to customize the Portal Application by manually arranging the application components 1 - 5 as recommended by the application developer 6. Additional deployment steps could be the installation of certain services 8 or the manual definition of interactions between application components 7.

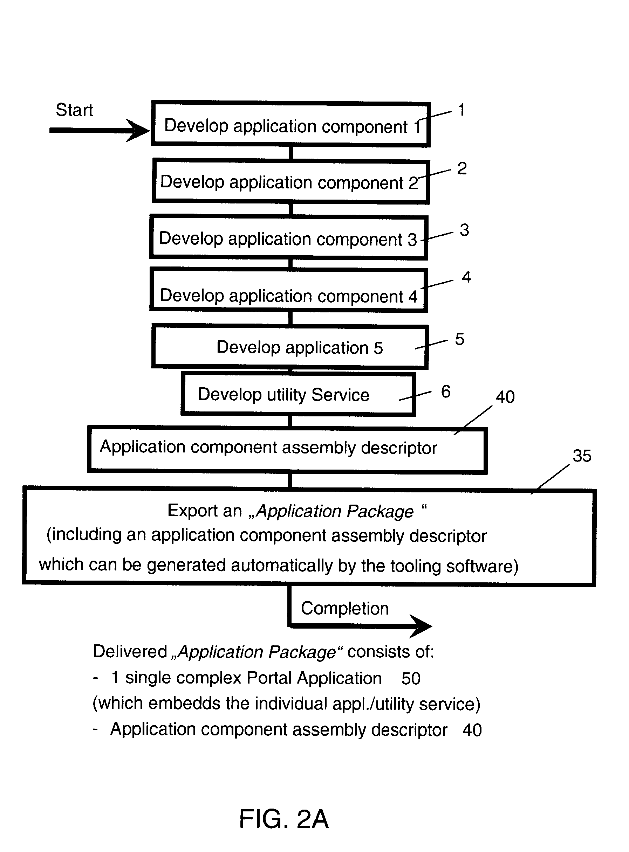

Fig. 2A shows the basic development process of a Portal Application as shown in Fig. 1A according to the present invention.

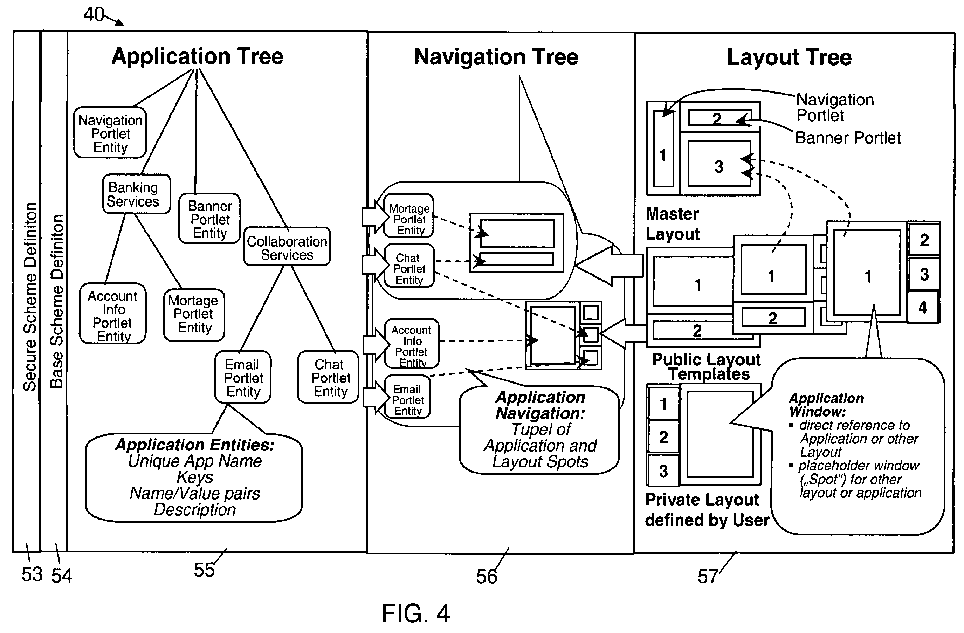

The present invention teaches that all individual application components 1 - 5 are stored and/or packaged together as an entity (e.g. a single Java EAR File, a set of correlated files, a database record), which includes all individual application components 1- 5 forming a coherent Portal Application. The Tooling Software defines the meta information which includes interactions between the application components 1 - 5 as well as the desired layout of the entire Portal Application. Based on this meta Information the Tooling Software can generate a machine-readable application component assembly descriptor 40 for the entire Portal Application and package it together with the application components 1 - 5 as an entity 35 being called Portal Application Archive. The content of the application component assembly descriptor is shown in more detail in Fig. 4D.

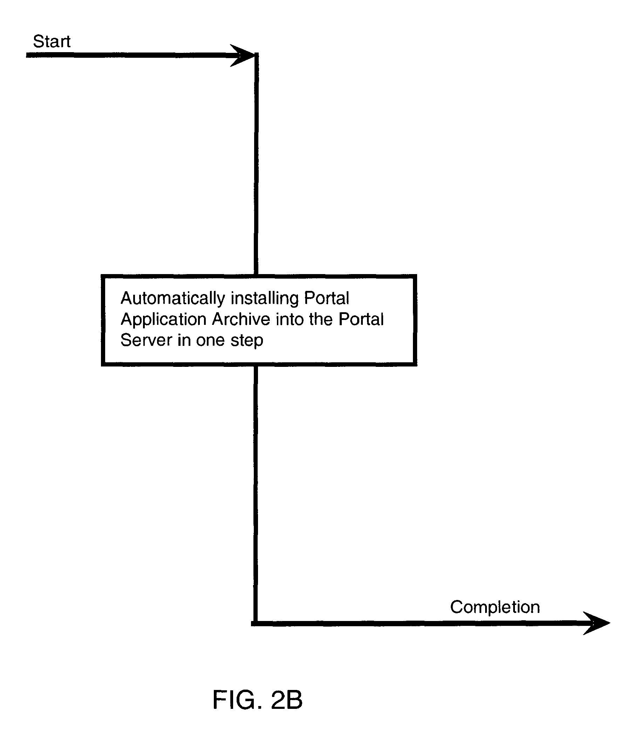

Fig.2B shows the basic deployment process of a Portal Application as shown in Fig. 1A according to the present invention.

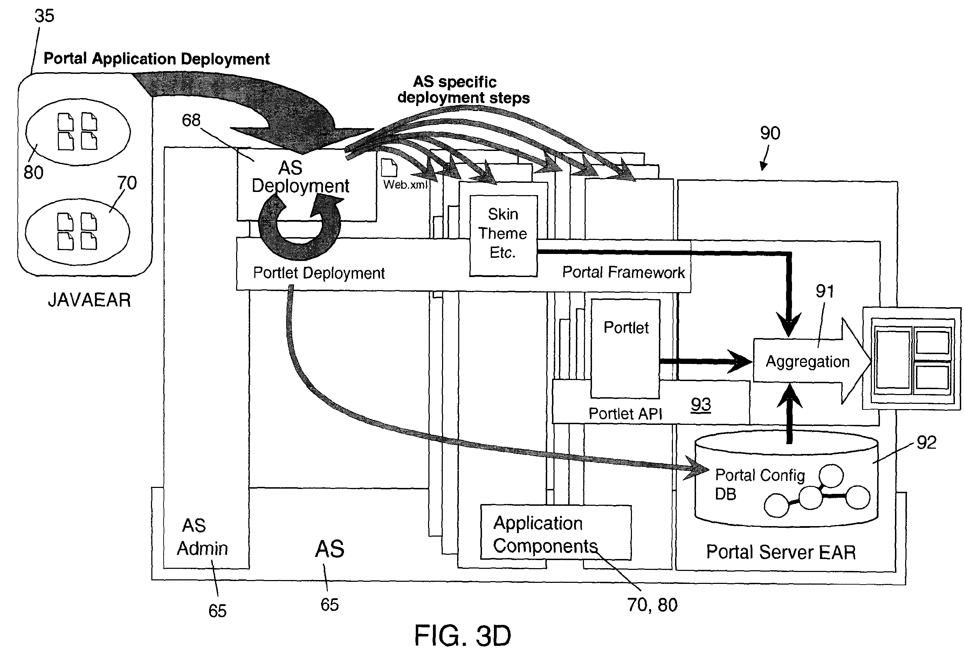

The present invention makes all prior art deployment steps obsolete. The entire Portal Application which is represented by the Portal Application Archive 35 is "installed automatically in one step". The meta information included in the application component assembly descriptor 40 being part of the Portal Application Archive 35 can be evaluated by the Portal Server Application deployment mechanism. Based on that information the necessary deployment steps can be triggered automatically. The Portal Server Application configuration can be manipulated to reflect the desired layout and interaction of the provided application components. The inventive deployment process is shown in more detail in Fig. 3D.

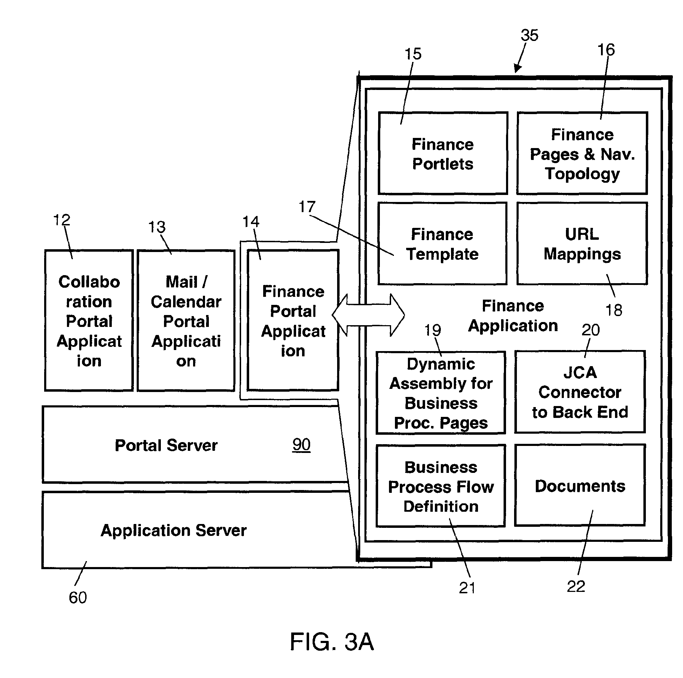

Fig. 3A shows an example of a complex Portal Application which is being developed by means of a Tooling Software and deployed by a deployment mechanism of the Portal Server Application according to the present invention.

Fig. 3A shows an example with three different Portal applications 30: collaboration 12, mail/calendar 13, and finance 14. The Finance Portal Application 14 includes a set of business process definitions 21, JCA connectors 20 to a Backend system, documents 22 describing the application for users, page definitions, URL mappings 18 and templates 17. The Portal Applications pages are made available in the Portal Server Application under the URLs defined in the URL mappings 18. The contained dynamic assembly module 19 for business process pages fills in dynamic pages in a placeholder node in the Pages & Navigation Topology, depending on the current state of business processes defined in the business process definitions. The contained application Portlets 15 allow creating new process instances, processing them. They can display the contained documents for help, use the contained connectors to access back end systems. Some of the contained Portlets are for administration of the Portal Application.

Within a Portal Application, based on their type, many application components reference other application components. For example, a node in the Topology tree can reference the definition of a Page, a node in the Resource tree can reference a Theme definition, the definition of a Page can reference one or more Portlets, etc.

In order to develop and deploy such a Portal Application according to present application new function components have to be added to the existing prior art Tooling Software and to Portal Server 90/Application Server 60 as follows:
- the Tooling Software (e.g. IBM Websphere Studio) need to be able to support the notion of Portal Applications, which can be developed consistently and comprise multiple individual, but related application components internally,
- the Tooling Software must be able to package and export comprehensive Portal Application Archives 35, which can be delivered by the application provider to the Portal Server Application. A key element is the application component assembly descriptor being preferably a XML file, which lists the content of the Portal Application and defines how the content is assembled to a Portal Application application. For example in an J2EE environment, the package format of choice are J2EE EAR files, which include all related application components as well as the deployment descriptor XML file,
- the Portal Server 90 or the Application Server 60 on which the Portal Server 90 runs(e.g. IBM Websphere Portal) must be able to import Portal Application Archives 35 and must automatically deploy the included application components 15-22 as described in the application component assembly descriptor file. For example this deployment into a running Portal Server Application environment 90 can be done by using the Application Server deployment. IBM WebSphere Portal Server 90 uses the APIs in the Applications Server's 60 deployment process to properly handle all Portal specific application components while the base J2EE application components are handled by the Application Server. Different application components 15-22 in the Portal Application Archive 35 influence the different parts of the Portal Server 90. The deployed application components 15-22 plug into different Portal Server Application components, like the aggregation, the Portal configuration or the Portlet Container (not shown).

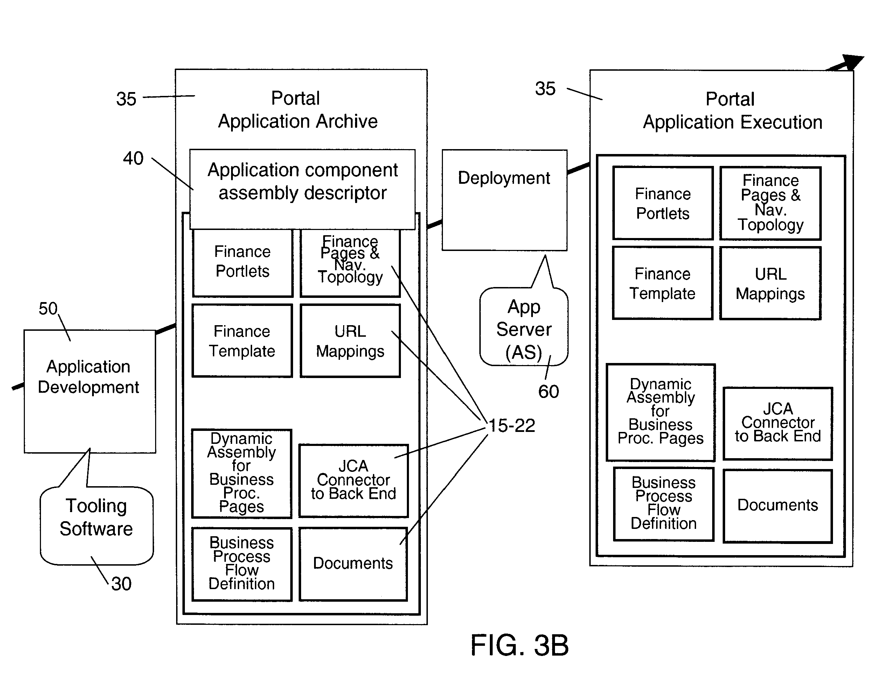

The overall Portal Application development and deployment process is shown in the Fig. 3 B.

### Portal Application development process

A Tooling Software 30 for Portal Application 50 must enhance the scope of a Portal Application according the present invention. Instead of developing individual Portlets, each project can include multiple application components 15-22, which can be developed independently as individual pieces of a Portal Application 50. In addition to existing tooling functionality, the relationship/interaction between different application components 15-22 of a complex Portal Application 50 needs to be programmable as well.

The Tooling Software 30 must also provide a layout editor (not shown), which allows defining the layout of the Portal Application 50 and arranging its application components 15-22 as desired.

The developed application components 15-22 must be stored within the Tooling Software's internal repository as a unit (not shown). It is important to emphasize that it is not sufficient to only store the "developed code of the individual application components 15-22". Additionally, the programmed relationship/interaction between the application components 15-22 as well as the defined layouts must be stored together with the actual code as well. For that purpose, it is suggested that the Tooling Software 30 uses the application component assembly descriptor file 35 to define how the various application components 15-22 are assembled to a coherent Portal Application 50. The application component assembly descriptor file 35 provides meta information (e.g. in XML) that describes the Portal Application 50 and its topology. The file can be considered as the table of content of a Portal Application 50 and also describes how to assemble and arrange the application components 15-22. The structure and content of the application component assembly descriptor file 35 will be described in a more detail with respect to Fig.4.

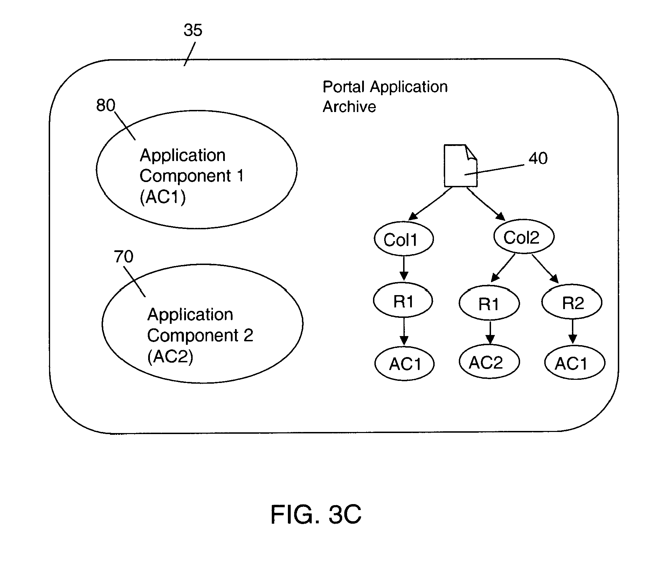

Fig.3C shows an example of the result of the inventive development process. The result of the development process is the inventive "Portal Application Archive 35". In that present example the Portal Application Archive is a single file package that includes two application components 70,80 in machine-readable code as well an application component assembly descriptor 40 (e.g. XML file) specifying the correlation between both application components 70,80. In the present example, the Portal Server Application deployment mechanism uses that application component assembly descriptor 40 and creates a new page with two columns. Column 1 contains a single row while column 2 contains two rows. Each of these rows contains one application component 70, 80.

Fig.3D shows a preferred implementation of the inventive deployment process in a Portal Server Application environment 90.

Portal Application Archives 35 can be deployed directly into the Portal's underlying Application Server 60 (AS) using its Application Server administration tools 65. Portal Server Application 90 uses the APIs in the Applications Server's deployment process 68 to properly handle all application components 70, 80. Fig.3 D shows how the different application components 70, 80 in the Portal Application Archive 35 influence the different parts 91, 92, 93 of the Portal Server Application 90. The application components 70, 80 plug into different Portal Server Application components, like the aggregation 91, the portal configuration 92 or the Portlet container 93.

Within a J2EE environment, Portal Application Archives 35 will be packaged as Java EAR files. As mentioned above, the Portal Application Archive EAR; 35 generated by the Portal Tooling Software (or manually) will be compliant to the J2EE specification and provide all necessary information required by the standard.

Therefore the EAR can be deployed on any J2EE compliant Application Server 60. Nevertheless a standard Application Server 60 (AS) would ignore the additional information such as the XML application component assembly descriptor file 35 and would not be able to determine how to assemble the various application components 70,80 to the desired Portal Application properly. For this purpose additional deployment logic (AS Deployment; 68) needs to be provided into the Application Server 60. This is described below:

The controller of the existing Application Server Deployment API (known as AppDeploymentController) accepts an arbitrary J2EE EAR file 35 as input, performs basic validation for J2EE spec compliance and then creates a sequence of tasks that need to be performed for deployment of the given EAR. The sequence of tasks can be extended programmatically to perform additional specific deployment logic. Such an additional task will be used to evaluate the application component assembly descriptor 35 and perform the necessary steps to deploy Portal Applications.

The AppDeploymentController instance is used by administrative clients that provide application installation capability to the Portal Server Application 90. It reads an EAR file and creates a sequence of AppDeploymentTasks which specify the data that needs to be collected from the end-user in order to install the EAR file.

The controller class has the following APIs among others -

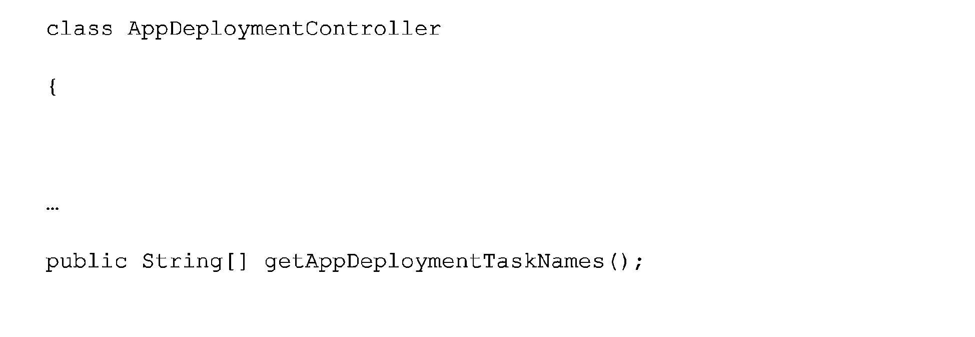

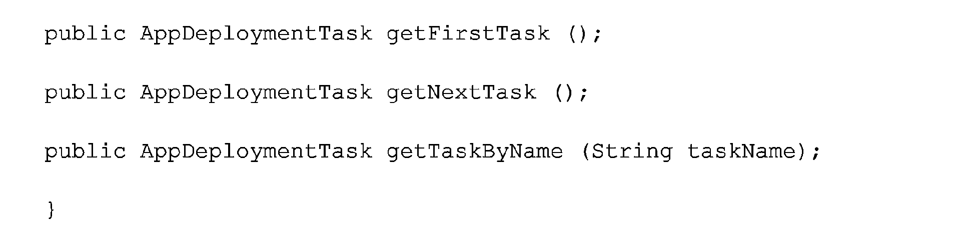

The APIs of AppDeploymentController class are documented by AS.

According to the AS specification, a client application needs to
1) create an instance of AppDeploymentController using AppManagementFactory and passing in an EAR file.
2) iterate over the tasks created by AppDeploymentController by calling getFirst and getNext methods
3) present the task data to the end-user and collects necessary data input by the user
4) set the data back into the tasks and saves the AppDeploymentController instance
5) call getAppDeploymentSavedResults API on the controller to get options, and calls installApplication API on AppManagement MBean passing in the EAR file and the options.

To deploy the Portal specific enhancements provided by the Portal Application Archive EAR 35, Portal Server 90 needs to implement its own Task Provider. Portal Server uses API in the Applications Server's deployment process 60 to properly handle all Portal specific application components while the base J2EE application components are handled by the Application Server 60. The Portal specific task provider can integrate additional deployment steps by implementing the interface

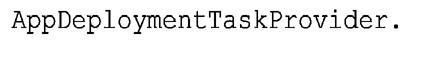

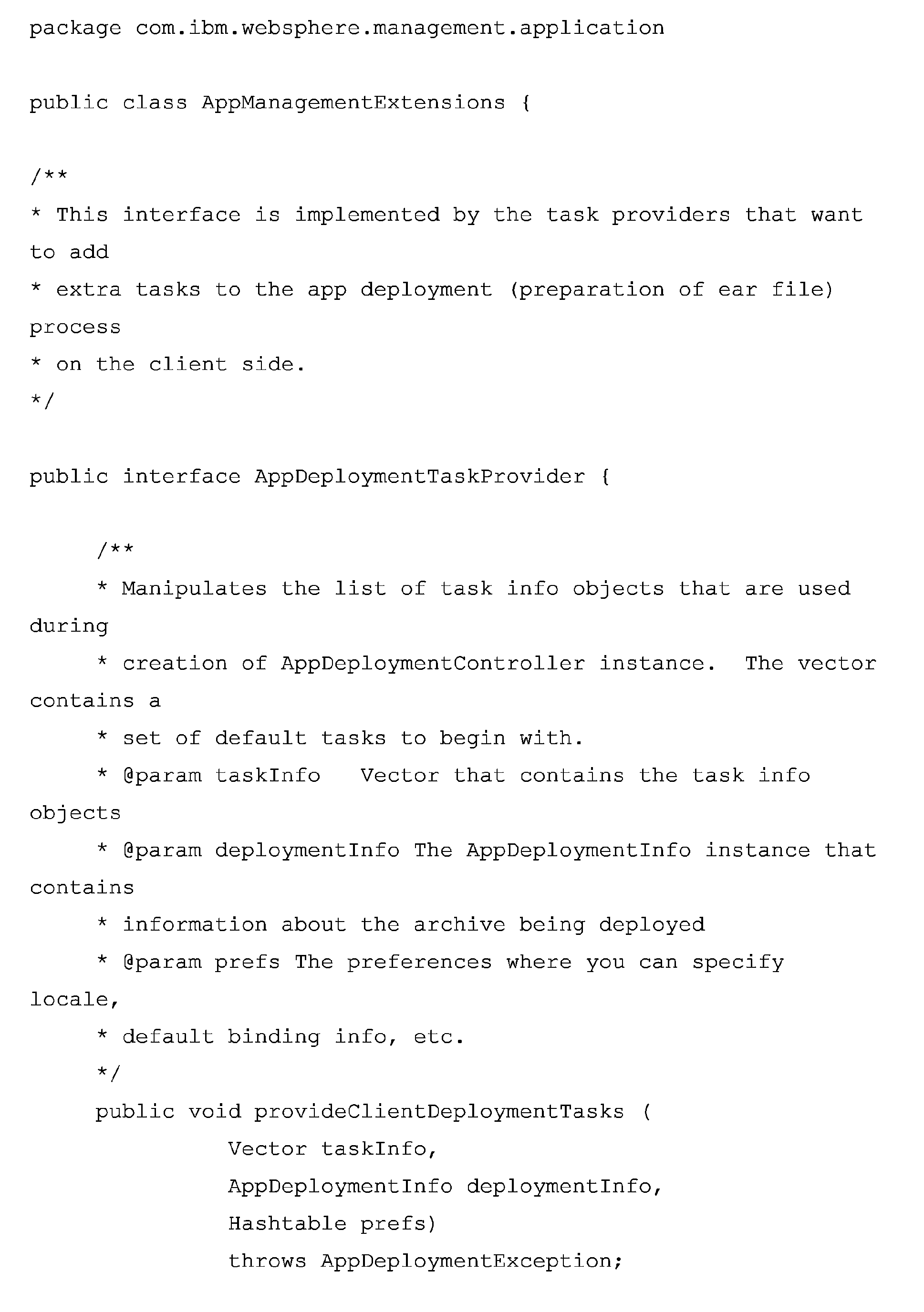

Based on the information in the application component assembly descriptor XML file 35, Portal specific tasks are invoked to register the application components 70,80 within the Portal Server Application 90 and perform the necessary Portal setup and administration steps automatically. The different application components 70, 80 in the Portal Application Archive 35 influence the different parts of the Portal Server Application 90. The application components 70, 80 plug into different Portal Server Application components, like the aggregation, the portal configuration or the Portlet container.

The Portal specific tasks which are added include:
Instantiate Portlets
Resolve external references
Apply Themes/Skins
Add pages to the page hierarchy
Define Page Layout
Setup access control settings/map users to roles
Connect Portlets using Click 2 Action wiring Usage of Portlets within Portal Applications

Portlets, along with Pages are the basic building blocks of Portal Applications - they provide the sub-units of user experience that are then aggregated by the Portal Application to provide the final user experience. Portlets are packaged into Portal Applications. Portal Applications are similar to J2EE web applications, except they make use of additional interfaces that make it easier to aggregate Portlets onto a single Page, as well as re-use Portlet applications and individual Portlets on many Pages within a Portal Application or Portal site. The packaging format of Portlet applications is the Web ARchieve (WAR) format that besides the web.xml deployment descriptor consists of the Portlet.xml deployment descriptor that defines the Portlet relevant parts of the web application.

A single Portlet produces the content of one Portlet window. In order to leverage the flexibility that Portlets can be used as building blocks, Portlet application developers should strive for small Portlets that contain a specific function instead of one large Portlet that includes all functions. This has several advantages:
- the portal end-user can decide to only put the needed parts on the page and save space that otherwise would be occupied by the parts not needed
- the different functions can be split across portal pages to suit the working behaviour of the user or to adapt to limited device display capabilities
- additional functions can later simply be added as new Portlets

Portlets that belong to the same logical application should be bundled together in a Portlet application as this has several advantages, like the ability to share configuration data, session data, ease of deployment and administration over the approach of one Portlet per Portlet application.

However, Portlet applications are currently very limited as they only deal with the Portlet part and do not allow to pre - assemble complete Portal Applications like the described invention. They miss the navigation and layout parts that are needed in order to provide useful portal applications.

Fig. 4 shows an example of an application component assembly descriptor file resulting from the inventive development process of a Portal Application.

The application component assembly descriptor file 40 is preferably based on several XSD Schema definitions:
Base Schema Definition 54
   Describes the basic elements, which are used in the other schema definitions below
Topology Schema Definition
   Describes all resources (J2EE references) and the application topology, including the layout
   i.e. Page layout 57, navigation trees 56, Portlets 55,
Security Schema Definition 53
   Describes security related aspects, such as application roles and their access control rights.

### Base Schema Definition 54

The base schema definition specifies basic elements which are used in the other two schema definitions. These elements include:
Title:
   A friendly name of an entity to be exposed to the programmer or user.
Description:
   The description element provides a NLS-enabled text
Parameter:
   A set of name/value pairs which allow to attaché customized attributes to an entity
nlsRef:
   A reference to a file, which can map localized strings.
Version String:
   An identifier to specify the version of an entity

The Topology description schema comprises 3 parallel trees 55, 56, 57 which are linked to each other:
The application tree lists and describes all application components, which are used by this Portal Application.
   Application components can be specified in a hierarchical order in that tree 55.
The layout tree defines the layouts which can be used by this Portal Application 57. Layouts can be included in other layouts. Layouts specify windows in which application components can be inserted.
The navigation tree defines the navigation hierarchy which the application exposes 56. This is done by defining navigation elements, which map the given application components to particular window in the available layouts.
The following list details the elements which are defined in the Topology Schema Definition:
   Topology Description 55, 56, 57:
      This is the root element of the topology description. It includes the application title, description, version, unique name, and its prerequisites. This element also references the application tree, layout tree as well as the navigation elements which combine application components and layouts.
Requires
   Specifies the unique names and versions of any prerequisites
Application Tree 55
   This is the root Element of Application Tree, which describes all application components.

This element provides a title, description and unique name provided. An application tree can reference other sub-application trees or directly one or more application elements.

### ApplicationElement"

The application element describes an application component with its properties. Besides title, description and unique name, a resource-link element references the binary code (e.g. a WAR file). Parameter name/value pairs can be used to provide application specific information.

### Application component type

This type lists all possible application element types:
o Portletdefinition
o Portletentity
o wire
o Portletservice
o service
o skin
o theme
o label
o urlLink
o tile
o any

### Resource Link

This element references the actually binary code of an application component (e.g. a WAR file). UID and URL are used for referencing. There are 2 link types, which can be applied:
Static
dynamic

### Layout Tree 57

This is the root element of Layout Tree, which describes all available layout templates. The layout tree element provides a title, description and can reference other layout trees or directly a particular layout element.

### Layout Element

The layout element describes a Layout Template. Besides title, description, parameters, unique Name and a keyword, the layout element includes a container in which content can be placed.

### Container

The container element can include several containers itself, or it can be used to place actual content into a layout.
Unique name, title, description and parameters are additional information documented in the container element. The following container types are possible:
row
   o Column
   o Grid

### Window

Title, description, and parameters are used within the Window element.
A window is the Placeholder into which actual content can be placed into a layout: Such content can be either:
o A reference to another layout element, which is embedded into the window of the given layout element
o A static reference to an application entity which is placed into the window as part of the layout definition.
o An empty spot, indicating that this window is free to be used by a navigation element using the given layout element. Each navigation element using this layout element can specify individually which application entity should be placed into this spot.

### Navigation Element 56

Navigation elements are nested and resemble the navigation tree, which the application exposes to the user. Each navigation tree can have one or more sub navigation elements. The referenced navigation content within the navigation element specifies how content is placed into the used layouts.
The layout element as well as Title, description, and parameters are specified within the Navigation element

### Navigation Content

The navigation content is used by the navigation element to map content (application entities) into a particular layout. For this purpose a particular application entity and a corresponding window within the given layout are referenced. The application entity will show up in that layout window, when the Portal Application is displayed.

## Claims

1. Method for automatically deploying a Portal Application (50) into a Portal Server Application environment (90), wherein said Portal Application (50) is provided to said Portal Server Application environment (90) as an entity (Portal Application Archive; 35) which includes all application components (15-22) forming a coherent Portal Application (50) in machine-readable code, and additionally an application component assembly descriptor (40) in machine-readable code which specifies how the single application components (15-22) need to be assembled to the complete Portal Application (50) on said Portal Server environment (90), wherein said method comprising the steps of:
providing said Portal Application Archive (35) to a deployment mechanism within the Portal Server Application environment (90) which is able to deploy said Portal Application Archive (35) into said Portal Server environment (90),
evaluating said application component assembly descriptor (40) included in said Portal Application Archive (35) by means of said deployment mechanism, and
automatically deploying said application components (15-22) into the respective parts of said Portal Server Application environment(90) according to the information included in said application component assembly descriptor (40).

2. Method according to claim 1, wherein said application component assembly descriptor (40) is a XML descriptor file.

3. Method according to claim 1, wherein said application component assembly descriptor (40) includes base schema definitions 54, topology schema definitions (55, 56, 57) and security schema definitions (54).

4. Method according to claim 1, wherein said Portal Application Archive 35 is provided as Java EAR file, or a set of correlated files, or database record.

5. Method according to claim 1, wherein said deployment mechanism is controlled by an Application Server (60) on which said Portal Server Application (90) runs.

6. Method according to claim 1, wherein said deployment mechanism provides the task to instantiate application components, resolve external references, apply themes/skins, add pages to the page hierarchy, define page layout, set up access control settings, map users roles, connect application components using "click - 2 - action" wiring.

7. Portal Server Application environment, wherein a Portal Application (50) is provided to said Portal Server Application environment as an entity (Portal Application Archive; 35), wherein said entity includes all application components (15-22) forming a coherent Portal Application (50) in machine-readable code, and additionally an application component assembly descriptor (40) in machine-readable code which specifies how the single application components (15-22) need to be assembled to the complete Portal Application (50) on said Portal Server Application environment (90), comprising:
means for automatically deploying said application components (15-22) into the respective parts of said Portal Server (90) according to the information included in said application component assembly descriptor (40).

8. Portal Server environment according to claim 7, further including an Application Server (60) on which said Portal Server Application (90) runs, wherein said means for deploying said Portal Application (50) is part of said Application Server (60).

9. Tooling Software for developing a Portal Application comprising
means for developing single application components,
means for developing application component assembly descriptor 40 which specifies how the single application components 15-22 need to be assembled to the complete Portal Application 50 on said Portal Server environment 90,
means for storing said single application components 15-22 and said application component assembly descriptor 40 together as an entity (Portal Application Archive; 35) into a repository,
means for providing said Portal Application Archive to a deploying mechanism of a Portal Server Application environment for automatically deploying said application components (15-22) into the respective parts of said Portal Server environment(90) according to the information included in said application component assembly descriptor (40).

10. Tooling Software according to claim 9, wherein said Portal Application Archive (35) is provided to a Portal Server Application environment as a packaged single file, or a packaged subset of correlated files, or in a database record.

11. Tooling Software according to claim 10, wherein said single file is a Java EAR file.

12. A computer program product stored on a computer usable medium, comprising computer readable program means for causing a computer to perform a method according to anyone of the claims 1 to 6.
